# EUROPEAN PATENT APPLICATION

(11) **EP 3 779 256 A1**
(43) Date of publication of application: **17.02.2021**
(21) Application number: 18913703.7
(22) Date of filing: 21.12.2018
(51) Int. Cl.: F16K 51/02, G01N 27/62, H01J 49/24

(54) **VACUUM DEVICE AND ANALYSIS DEVICE**

(30) Priority: 02.04.2018 JP 2018070671
(71) Applicant: SHIMADZU CORPORATION, Kyoto-shi, Kyoto 604-8511 (JP)
(72) Inventor: HOSOI, Kosuke, Kyoto-shi, Kyoto 604-8511 (JP); INUI, Kimitaka, Kyoto-shi, Kyoto 604-8445 (JP)
(74) Representative: Mewburn Ellis LLP
(86) International application number: PCT/JP2018/047284
(87) International publication number: WO 2019/193791

(57) **Abstract**

A vacuum device includes: a first chamber; a second chamber connected with the first chamber via an opening; and a decompression unit that decompresses the first chamber and the second chamber, wherein: the first chamber includes: a valve that is movable between a first position facing the opening and a second position not facing the opening; and a drive unit that is fixed to the first chamber and moves the valve in the first position toward the opening to control opening and closing of the opening.

## Description

### TECHNICAL FIELD

The present invention relates to a vacuum device and an analytical device.

### BACKGROUND ART

A vacuum device provided with a plurality of vacuum chambers connected to each other through an opening is known. In such a vacuum device, the pressure of each vacuum chamber can be independently controlled by controlling the opening/closing of the opening.

For example, in a mass spectrometer that performs ionization by matrix assisted laser desorption/ionization (MALDI), a chamber in which a sample is placed (hereinafter referred to as a sample chamber) and a chamber in which a mass separation unit is placed (hereinafter referred to as an analysis chamber) are connected through an opening that can be opened and closed. In such a mass spectrometer, by closing the opening when exchanging the sample, only the sample chamber can be exposed to the atmospheric pressure while the vacuum state of the analysis chamber can be maintained. This makes it possible to shorten the time required to bring the analysis chamber to a desired degree of vacuum when the mass spectrometry is performed after the sample is exchanged (see PTL 1).

### CITATION LIST

### PATENT LITERATURE

PTL 1: Japanese Laid-Open Patent Publication No. 2016-115565

### SUMMARY OF INVENTION

### TECHNICAL PROBLEM

For opening and closing the opening connecting a plurality of vacuum chambers, it has been proposed to use a movable mechanism including a valve, however the vacuum device may be upsized due to the valve and the movable mechanism.

### SOLUTION TO PROBLEM

According to a first aspect of the present invention, a vacuum device, comprises: a first chamber; a second chamber connected with the first chamber via an opening; and a decompression unit that decompresses the first chamber and the second chamber, wherein: the first chamber includes: a valve that is movable between a first position facing the opening and a second position not facing the opening; and a drive unit that is fixed to the first chamber and moves the valve in the first position toward the opening to control opening and closing of the opening.

According to a second aspect of the present invention, in the vacuum device according to the first aspect, it is preferable that the first chamber includes therein a sample mounting unit at which a sample is mounted.

According to a third aspect of the present invention, in the vacuum device according to the second aspect, it is preferable that the sample mounting unit and the valve are integrally movable.

According to a fourth aspect of the present invention, in the vacuum device according to the second or third aspect, it is preferable that a sample arranged on the sample mounting unit can be exchanged by a user when the valve is in the first position.

According to a fifth aspect of the present invention, in the vacuum device according to any one of the second to fourth aspects, it is preferable to further comprise: a fixing portion that prevents the valve from moving from the first position to the second position after the valve closes the opening.

According to a sixth aspect of the present invention, in the vacuum device according to the fifth aspect, it is preferable that the fixing portion is a portion where the valve and the drive unit are engaged with each other, and the engagement prevents the valve from moving from the first position to the second position.

According to a seventh aspect of the present invention, in the vacuum device according to the fifth aspect, it is preferable that the fixing potion is a fixture that is installed at a vacuum partition of the first chamber and fixes the sample mounting unit or the valve.

According to an eighth aspect of the present invention, an analytical device, comprises: the vacuum device according to any one of the first to seventh aspects.

According to a ninth aspect of the present invention, in the analytical device according to the eighth aspect, it is preferable that the second chamber includes therein a mass separation unit that performs mass separation of ions emitted from the first chamber.

### ADVANTAGEOUS EFFECTS OF INVENTION

According to the present invention, it is possible to realize a compact vacuum device while enabling opening and closing of an opening that connects a plurality of chambers.

### BRIEF DESCRIPTION OF DRAWINGS

[FIG. 1] FIG. 1 is a conceptual diagram showing a configuration of an analytical device provided with a vacuum device according to a first embodiment.
[FIG. 2] FIG. 2 is a sectional view taken along line A-A of FIG. 1.
[FIG. 3] FIG. 3 is a conceptual diagram showing a cross section of a valve cut along its long axis.
[FIG. 4] FIG. 4(A) is a sectional view schematically showing a cross section of the sample chamber when a sample is placed to face the opening, and FIG. 4(B) is a sectional view schematically showing a cross section of the sample chamber in which the valve is arranged to face the opening.
[FIG. 5] FIG. 5(A) is a sectional view schematically showing a cross section of the sample chamber when the valve seals the opening, and FIG. 5(B) is a sectional view schematically showing a cross section of the sample chamber when a sample plate is being taken out from a sample mounting unit.
[FIG. 6] FIG. 6 is a conceptual diagram showing a configuration of an information processing unit of the analytical device provided with the vacuum device according to the first embodiment.
[FIG. 7] FIG. 7 is a flow chart showing a flow of the analytical method using the vacuum device according to the first embodiment.
[FIG. 8] FIG. 8(A) is a sectional view schematically showing a cross section of the sample chamber when the sample is placed to face the opening, and FIG. 8(B) is a sectional view schematically showing a cross section of the sample chamber when the valve is sealing the opening.
[FIG. 9] FIG. 9 is a conceptual diagram showing a configuration of the analytical device provided with the vacuum device according to a second embodiment.
[FIG. 10] FIG. 10(A) is a conceptual diagram illustrating the state of a link mechanism when the opening is not sealed by the valve in the second embodiment, and FIG. 10(B) is a conceptual diagram illustrating the state of the link mechanism when the opening is sealed by the valve in the second embodiment.

### DESCRIPTION OF EMBODIMENTS

Hereinafter, an embodiment for carrying out the present invention will be described with reference to the drawings.

### First Embodiment

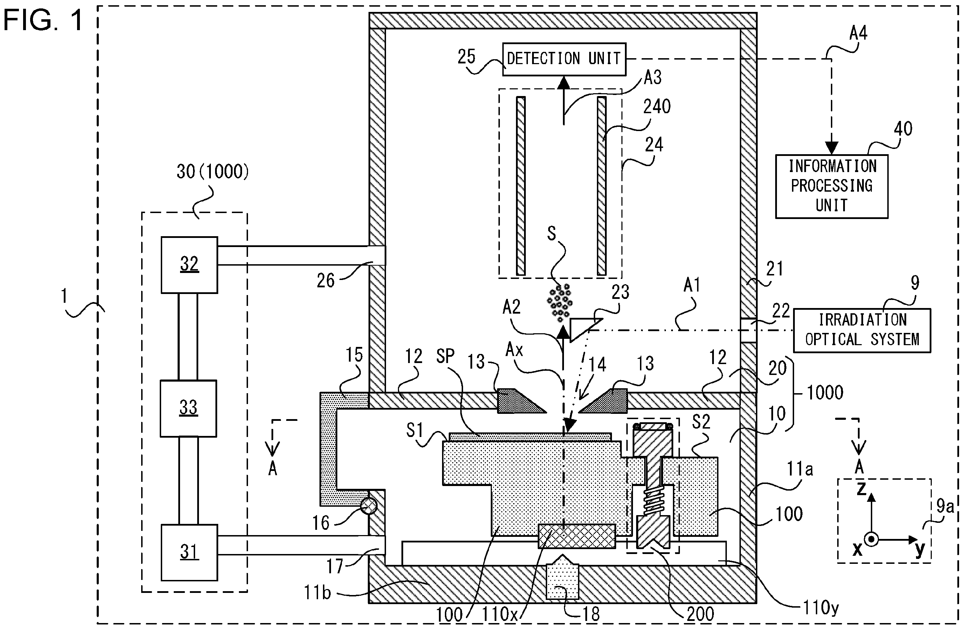

FIG. 1 is a conceptual diagram showing a configuration of an analytical device provided with a vacuum device according to the present embodiment. An analytical device 1 is a mass spectrometer (MALDI-TOFMS) that ionizes a sample S by matrix assisted laser desorption/ionization (MALDI) and analyzes the ionized sample S by time-of-flight mass spectrometry. The analytical device 1 includes an irradiation optical system 9, a sample chamber 10, an analysis chamber 20, a decompression unit 30, and an information processing unit 40. The sample chamber 10, the analysis chamber 20, and the decompression unit 30 constitute a vacuum device 1000.

The sample chamber 10 includes a side wall 11a, a bottom portion 11b, a sample door 15, a hinge 16, a sample chamber side evacuate port 17, a drive unit 18, a sample mounting unit 100 for mounting a sample plate SP on which a mass spectrometry sample including a sample S is placed, an X-direction guide rail 110x, a Y-direction guide rail 110y, and a valve 200. The side wall 11a, the bottom portion 11b, and the sample door 15 compose a vacuum partition wall between the sample chamber 10 and the outside. In FIG. 1, the Z axis is set parallel to the central axis Ax of an opening 14. The Y-direction guide rail 110y is installed along the Y-axis direction (direction parallel to the paper surface of FIG. 1) which goes from the opening 14 to the sample door 15 perpendicular to the Z-axis. The X-direction guide rail 110x is installed along the X-axis direction (direction perpendicular to the paper surface of FIG. 1) perpendicular to the Z-axis and the Y-axis. The Y-direction guide rail 110y is installed along the Y-axis direction that is perpendicular to both the X-axis and the Z-axis (see coordinate axes 9a). The same applies to the following figures when the coordinate axes 9a are shown.

The analysis chamber 20 includes an outer wall 21, a window portion 22, a mirror 23, a mass separation unit 24, a detection unit 25, and an analysis chamber side evacuate port 26. The mass separation unit 24 includes a flight tube 240. The outer wall 21 and the window portion 22 compose a vacuum partition between the analysis chamber 20 and the outside.

A vacuum device 1000 includes a partition plate 12, an extraction electrode 13, and the opening 14 which are arranged between the sample chamber 10 and the analysis chamber 20. The partition plate 12 and the extraction electrode 13 compose a vacuum partition between the sample chamber 10 and the analysis chamber 20. The extraction electrode 13 is formed so as to surround the opening 14 when viewed from the Z-axis direction, and the sample chamber 10 and the analysis chamber 20 are connected by the opening 14. By sealing the opening 14 by the valve 200 located inside the sample chamber 10, the pressure inside the sample chamber 10 and the pressure inside the analysis chamber 20 can be independently controlled.

The decompression unit 30 includes a sample chamber decompression pump 31, an analysis chamber decompression pump 32, and an auxiliary pump 33. The sample chamber decompression pump 31 decompresses the sample chamber 10 by evacuating the air from the sample chamber-side evacuate port 17. The analysis chamber decompression pump 32 decompresses the analysis chamber 20 by exhausting the air from the analysis chamber side exhaust port 26. The auxiliary pump 33 is a pump for roughing, and also for maintaining the back pressure of the sample chamber decompression pump 31 and the analysis chamber decompression pump 32.

In the vacuum device 1000, for example, the sample chamber decompression pump 31 and the analysis chamber decompression pump 32 may be turbo molecular pumps, and the auxiliary pump 33 may be a rotary pump. Ionization, mass separation and detection of the sample S described below are performed under a high vacuum (for example, 10⁻⁵ to 10⁻⁷ Torr) realized by the turbo molecular pumps.

It is noted that the type of pump used in the decompression units is not particularly limited as long as a desired degree of vacuum can be obtained.

Hereinafter, the configuration of the sample chamber 10, the method of replacing the sample plate SP in the sample chamber 10, and the like will be described. The sample chamber 10 is configured so that the sample plate SP are appropriately removed from and arranged to the sample chamber 10 while suppressing the increase in the pressure of the analysis chamber 20 by sealing the opening 14 with the valve 200 after decompressing the sample chamber 10 and the analysis chamber 20.

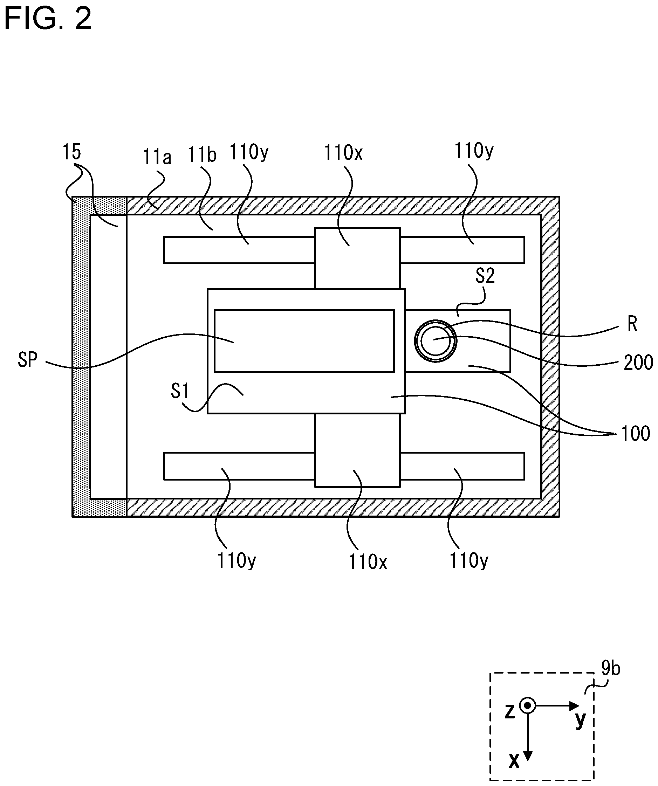

FIG. 2 is a sectional view taken along the line A-A of FIG. 1, and shows the upper surface of the sample mounting unit 100 and the like. In FIG. 2, the positional relationship between the coordinate axes and the analytical device 1 is the same as in FIG. 1, however the Z axis is set along the direction perpendicular to the paper surface, the X axis is set along the vertical direction of the figure, and the Y axis is set along the horizontal direction of the figure (see coordinate axes 9b).

On the bottom portion 11b, two Y-direction guide rails 110y are arranged substantially parallel to each other along the Y-axis direction and fixed to the bottom portion 11b. The X-direction guide rail 110x is arranged on the two Y-direction guide rails 110y so as to be movable along the Y-direction guide rail. The X-direction guide rail 110x is supported by the Y-direction guide rails 110y via a slider (not shown) or the like. The movement of the X-direction guide rail 110x along the Y-direction guide rail 110y is controlled by a motor or the like (not shown).

The sample mounting unit 100 includes a support member of the sample plate SP such as a sample plate holder. The sample mounting unit 100 is supported so as to be movable along the X-direction guide rail 110x via a slider or the like (not shown). The movement of the sample mounting unit 100 along the X-direction guide rail 110x is controlled by a motor or the like (not shown). A sample plate SP is arranged on the sample mounting surface S1 of the sample mounting unit 100. The sample plate SP is detachably fixed by a fastener (not shown).

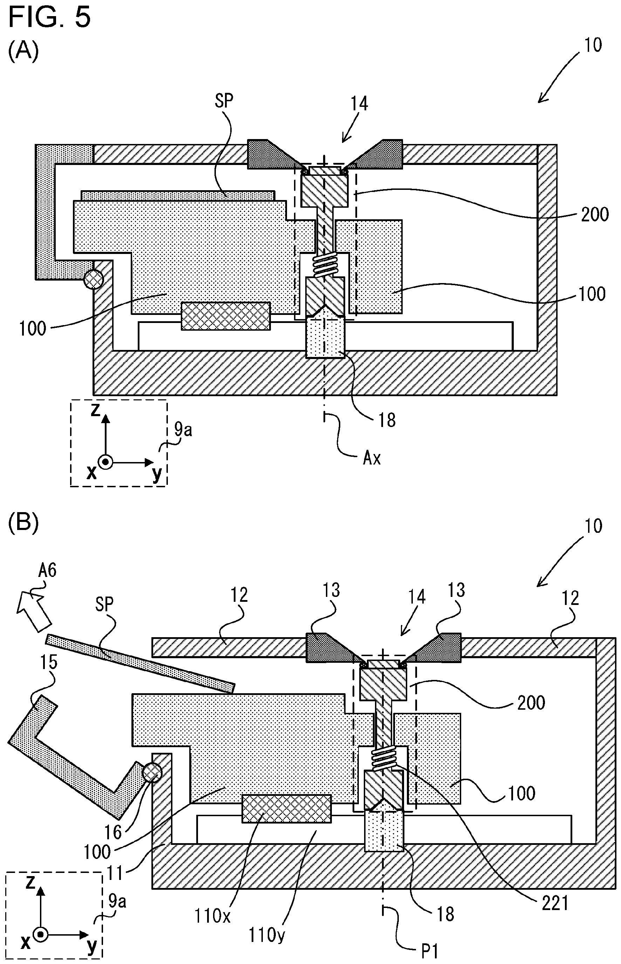

The sample door 15 is attached to the side wall 11a via the hinge 16 (FIG. 1) so as to be rotatable around the hinge 16 as a central axis. The sample mounting unit 100 is configured such that, as the sample door 15 is rotated and opened when the valve 200 is in a position facing the opening 14, a user of the analytical device 1 (hereinafter simply referred to as "user") can attach or detach the sample plate SP through between the sample door 15 and the partition plate 12 (see FIG. 5B). On the sample plate SP, the mass spectrometry samples (not shown) are arranged at predetermined intervals. The mass spectrometry sample is prepared by mixing the sample S and matrix.

The valve 200 is arranged in contact with a valve supporting surface S2 of the sample mounting unit 100, and is supported by the sample mounting unit 100 via the valve supporting surface S2. An O-ring R is arranged at the end of the valve 200. The valve 200 is arranged on the sample mounting part 100 so as to be movable from the state in contact with the valve support surface S2 (FIG. 1) toward the side where the opening 14 is arranged, that is, upward along the Z axis (the positive direction of the Z axis (see the coordinate axes 9a)).

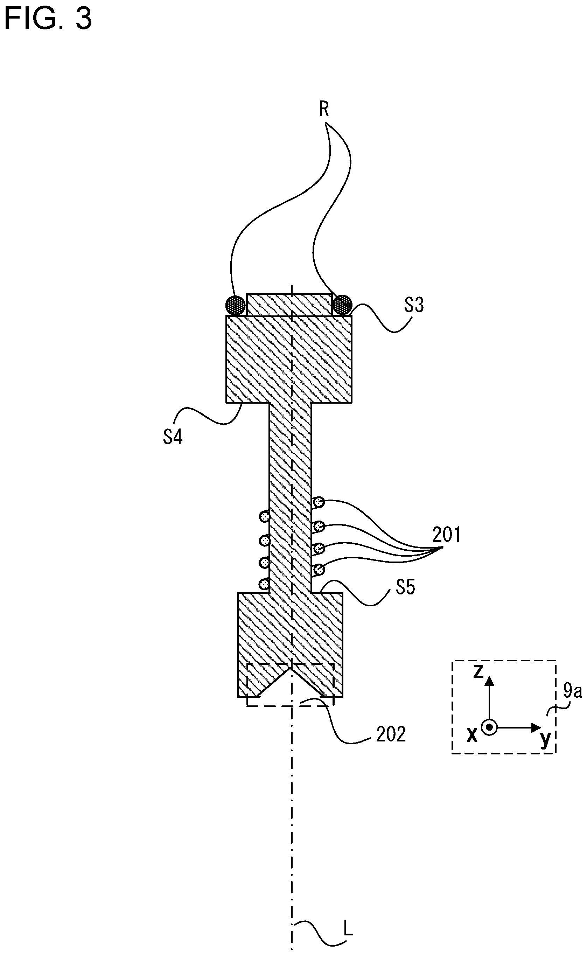

FIG. 3 is a conceptual diagram showing a cross section of the valve 200 cut along the long axis L. The valve 200 includes a spring 201, a valve side engaging portion 202, an O-ring contact surface S3 that contacts the O-ring R, a sample mounting unit contact surface S4 that comes in contact with the sample mounting unit 100, and a spring contact surface S5 that contacts the spring 201.

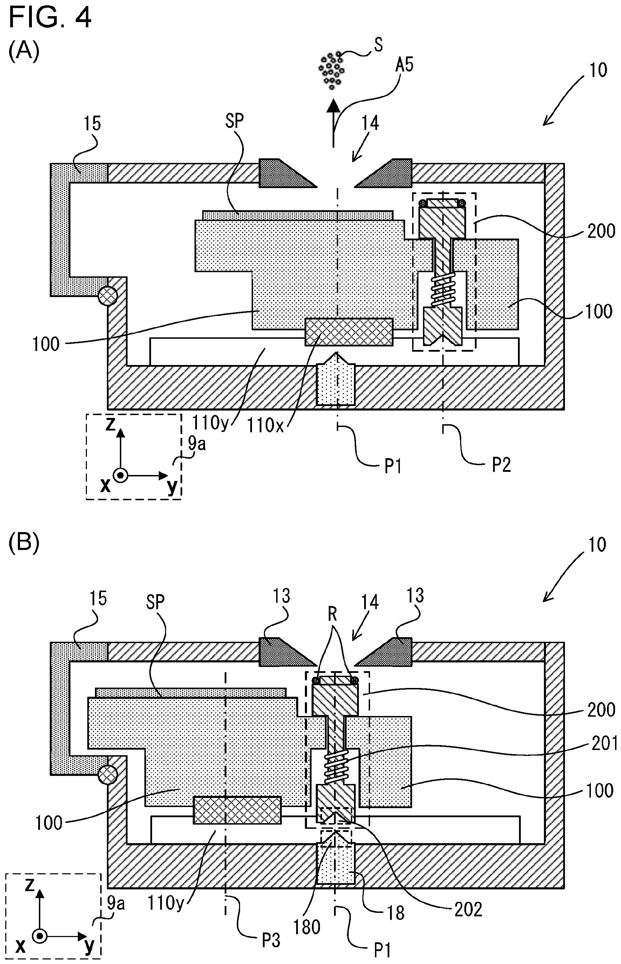

The spring 201 applies forces to the sample mounting portion 100 and to the spring contact surface S5 in opposite directions to each other, such that the valve 200 can be moved away from the opening 14 or the valve 200 can seal the opening 14 with an appropriate force. The valve side engaging portion 202 is formed in a shape that engages with a drive unit side engaging portion 180 (FIG. 4B) of the drive unit 18. Accordingly, as will be described later, when the valve 200 is moved by the force from the drive unit 18 to seal the opening 14, the valve 200 is fixed so as not to move or tilt in the direction perpendicular to the long axis L. That is, the valve side engaging portion 202 and the drive unit side engaging portion 180 function as a fixed portion that fixes the valve 200. For the sake of clarity, in the drawings other than FIG. 3, the spring 201 schematically shows its side surface.

The drive unit 18 (FIG. 1) includes an actuator, and the valve 200 is moved toward the opening 14 to seal the opening 14 by driving of the actuator. The drive unit 18 converts rotary motion or X or Y direction reciprocal motion by a power source such as a motor or the like into movement of the drive unit side engaging portion 180 in the Z axis direction through, for example, a link mechanism or a cam mechanism. Then, the valve side engaging portion 202 is pressed by the moved drive unit side engaging portion 180 to move the valve 200, and the O-ring R at the end of the valve 200 is pressed against the extraction electrode 13 to seal the opening 14.

FIG. 4(A), FIG. 4(B), FIG. 5(A) and FIG. 5(B) are diagrams schematically illustrating a method for exchanging the sample plate SP.

FIG. 4(A) is a sectional view schematically showing a cross section of the sample chamber 10 when the sample S is placed at a position facing the opening 14 (hereinafter referred to as a first position PI). At this state, the valve 200 is in a position not facing the opening 14 (hereinafter referred to as a second position P2). The second position P2 can take various positions depending on the position of the sample S on the sample plate SP. As described, when the sample S is in the first position P1 and the valve 200 is in the second position P2, the sample mounting unit 100 is referred to as being in a "measurement position". When the sample mounting unit 100 is at the measurement position, the sample chamber 10 and the analysis chamber 20 are depressurized to the above-mentioned predetermined vacuum degree, and the sample S is ionized (an arrow A5) by being irradiated with laser light from the irradiation optical system 9 (FIG. 1) .

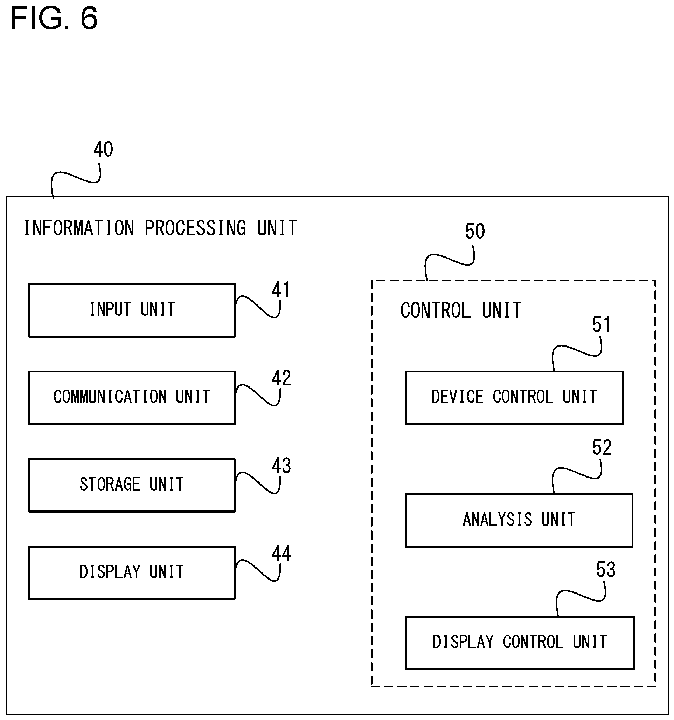

Hereinafter, a flow of replacing the sample plate SP after the sample S is ionized will be described. Upon finishing the laser irradiation from the irradiation optical system 9, a device control unit 51 (see FIG. 6) in the information processing unit 40 to be described later moves the sample mounting portion 100 and the X-direction guide rail 110x toward the side where the sample door 15 is arranged along the Y-direction guide rail 110y.

FIG. 4(B) is a diagram schematically showing a cross section of the sample chamber 10 after the sample mounting unit 100 has moved to the sample door 15 side along the Y-direction guide rail 110y. The sample S moves to a position (P3) not facing the opening 14, and the valve 200 moves to a position (PI) facing the opening 14. When the sample S is at the position P3 and the valve 200 is at the position P1 as described above, the sample mounting unit 100 is referred to as being in a "non-measurement position". In the state that the sample mounting unit 100 is in the non-measurement position, the drive unit 18 causes the drive unit side engaging portion 180 and the valve side engaging portion 202 to engage with each other so that the force of the drive unit 18 exceeds the elastic force of the spring 201 and the valve 200 moves to the opening 14. Then, the O-ring R at the end of the valve 200 is pressed against the extraction electrode 13 to seal the opening 14.

FIG. 5(A) is a sectional view schematically showing a cross section of the sample chamber 10 when the valve 200 seals the opening 14. At this state, the opening 14 is sealed so that the pressure in the sample chamber 10 and the pressure in the analysis chamber 20 can be controlled independently. With respect to the engaging portion between the drive unit 18 and the valve 200, the valve 200 side has a convex shape and the drive unit 18 side has a concave shape and therefore functions as a fixing portion that fixes the valve 200. Therefore, even if a force is applied to the valve 200 in a direction perpendicular to the central axis of the opening 14, the sample mounting portion 100 and the valve 200 do not move readily. Accordingly, it is possible to prevent the valve 200 from being removed and damaging instruments inside the analysis chamber 20, the analysis chamber decompression pump 32 (FIG. 1) and the like when the sample chamber 10 is under below the atmospheric pressure.

FIG. 5(B) is a sectional view schematically showing a cross section of the sample chamber 10 when the sample plate SP is being taken out from the sample mounting unit 100. In the state that the valve 200 is at the first position P1, the user or the like can rotate the sample door 15 about the hinge 16 as a rotation axis to open the sample door 15. The user takes out the sample plate SP arranged on the sample mounting unit 100 from between the sample door 15 and the partition plate 12 with a hand or tweezers (an arrow A6). After that, the user arranges and fixes the sample plate SP on which an unmeasured sample S is arranged on the sample mounting unit 100. Upon arranging the sample plate SP, the sample door 15 is closed, and the device control unit 51 controls the sample mounting unit 100 to move to the measurement position along the Y-direction guide rail 110y, and the mass spectrometry of the sample S is performed.

In the vacuum device 1000 according to the present embodiment, the sample mounting unit 100 and the valve 200 move integrally. Therefore, it is not necessary to separately perform at least parts of the operation for taking out the sample plate SP and the operation for sealing the opening 14 (movement of the valve 200, etc.), so that the operation can be speeded up and/or simplified. For the vacuum chamber in which the sample mounting unit 100 and the valve 200 move integrally, the drive unit 18 may be provided in the sample mounting unit 100 as in the second embodiment. However, in the case that the drive unit 18 is fixed to the side wall or the bottom of the vacuum chamber as in the present embodiment, there is an advantage that the opening 14 and the drive unit 18 do not need to be aligned.

The sample chamber 10 is configured such that in the state that the sample mounting unit 100 is in the non-measurement position, the opening 14 can be sealed by the valve 200 and the sample plate SP can be taken out. Accordingly, the movement of the sample mounting unit 100 for taking out the sample plate SP and the movement of the valve 200 for sealing the opening 14 can be performed at one time. Further, in the state that the analysis chamber 20 is depressurized, the sample door 15 can be locked so as not to open if the valve 200 is not in the first position P1. Alternatively, in the state that the analysis chamber 20 is depressurized, the sample door 15 can be locked so as not to open if the valve 200 does not close the opening 14. Thereby, it is possible to prevent instruments in the analysis chamber 20 from being damaged due to an unintended increase in pressure.

Back to FIG. 1, the irradiation optical system 9 includes a laser light source that emits laser light. The type of laser light source that generates laser light is not particularly limited as long as it can oscillate light that can be absorbed by the matrix to be used for preparing the mass spectrometry sample. N₂ laser (wavelength 337 nm) or the like can be preferably used. The laser light emitted from the irradiation optical system 9 enters the window portion 22.

The window portion 22 is installed on the outer wall 21 of the analysis chamber 20, transmits the incident laser light and emits it toward the mirror 23 arranged inside the analysis chamber 20. The mirror 23 reflects the incident laser light toward the opening 14. The laser light reflected by the mirror 23 passes through the opening 14 and enters the sample chamber 10, and enters the mass spectrometry sample arranged on the sample plate SP. In FIG. 1, the optical path of the laser light emitted from the irradiation optical system 9 is schematically shown by a two-dot chain line arrow A1.

As the laser light is incident on the mass spectrometry sample on the sample plate SP, the matrix contained in the mass spectrometry sample is excited, and ionization and vaporization of the sample S occur through this excitation. The sample plate SP contains conductive material such as stainless steel, and an electric field is generated between the sample plate and the extraction electrode 13 formed around the opening 14. The ionized sample S is directed to the opening 14 by the force based on this electric field, passes through the opening 14, and is introduced into the analysis chamber 20 (an arrow A2).

The ionized sample S introduced into inside the analysis chamber 20 is accelerated by an accelerating electrode (not shown) and enters the flight tube 240 of the mass separation unit 24. At the accelerating electrode, the ions are accelerated by a substantially constant potential, and each ion travels at a speed based on the value of m/z thereof. Thereby, ionized components of the sample S are separated based on m/z while traveling inside the flight tube 240.

The detection unit 25 includes an ion detector such as a multi-channel plate. Each ion of the sample S separated by the mass separation unit 24 enters the detection unit 25 with a flight time based on m/z (an arrow A3). The detection unit 25 detects each ion of the sample S separated by the mass separation unit 24 and outputs a detection signal having an intensity corresponding to the number of ions incident on the detection unit 25. The detection unit 25 A/D-converts the detection signal with an A/D converter (not shown) and outputs it to the information processing unit 40 (broken line arrow A4).

It is to be noted that, although a flight tube of linear type is used in FIG. 1, a flat tube of reflectron type or multi-turn type may be used. Furthermore, as long as the ionized sample S can be separated and detected, the method of mass spectrometry is not particularly limited. For an example, it is also preferred that an ion trap time-of-flight mass spectrometer in which ions controlled by the ion trap are to be separated at the flight tube, is used as the analytical device 1.

FIG. 6 is a conceptual diagram showing a configuration of the information processing unit 40. The information processing unit 40 includes an input unit 41, a communication unit 42, a storage unit 43, a display unit 44, and a control unit 50. The control unit 50 includes the device control unit 51, an analysis unit 52, and a display control unit 53.

The information processing unit 40 includes an information processing device such as an electronic computer, appropriately interfaces with the user, and also performs processing relating to various data such as communication, storage, calculation.

It is to be noted that, the information processing unit 40 may be configured as one device integrated with the vacuum device 1000.

The input unit 41 includes an input device such as a mouse, a keyboard, various buttons and/or a touch panel. The input unit 41 receives, from the user, information such as movement of the sample mounting unit 100 and/or information regarding analysis conditions such as decompression by the decompression unit 30, necessary for the processing performed by the control unit 50.

The communication unit 42 is configured to include a communication device capable of communicating by wireless or wired connection via a network such as internet. The communication unit 42 appropriately transmits and receives necessary data such as data for analyzing measurement data.

The storage unit 43 includes a non-volatile storage medium. The storage unit 43 stores the measurement data output from the vacuum device 1000, a program for the control unit 50 to execute processing, and the like.

The display unit 44 is controlled by the display control unit 53, and is configured to include a display device such as a liquid crystal monitor so as to display information regarding analysis conditions, analysis results of the analysis unit 52, and the like on the display device.

The control unit 50 is configured to include a processor such as a CPU. The control unit 50 controls operations of the irradiation optical system 9 and the vacuum device 1000, analyzes the measurement data output from the vacuum device 1000, and executes various processing by executing programs stored in the storage unit 43 and the like.

The device control unit 51 of the control unit 50 controls the operations of the vacuum device 1000 and the irradiation optical system 9 based on the analysis conditions and the like set based on the input and the like from the input unit 41. The device control unit 51 controls movement of the sample mounting unit 100 and the valve 200, decompression by the decompression unit 30, emission of laser light by the irradiation optical system 9, mass separation in the mass separation unit 24, detection by the detection unit 25, and the like.

The analysis unit 52 of the control unit 50 analyzes the measurement data based on the detection signal output from the detection unit 25. The analysis unit 52 converts the flight time corresponding to the detected intensity into m/z by using a calibration curve or the like obtained by measuring a calibration sample, and creates a mass spectrum. The analysis unit 52 calculates a detection amount of the ionized sample S corresponding to each peak from respective peaks of the mass spectrum. This detected amount is quantified by a peak area which is an area corresponding to the peak, a peak intensity which is the maximum value of the peak, and the like. The peak area and the peak intensity can be calculated by appropriately removing noise and smoothing the detected intensity value by a known method.

It is to be noted that, the analysis method and the like are not particularly limited, and can be appropriately selected depending on the purpose, the employed type of mass spectrometry method and the like.

The display control unit 53 creates a display image from the analysis conditions of the vacuum device 1000 and/or the analysis result of the analysis unit 52 such as the mass spectrum, and outputs the display image to the display unit 44.

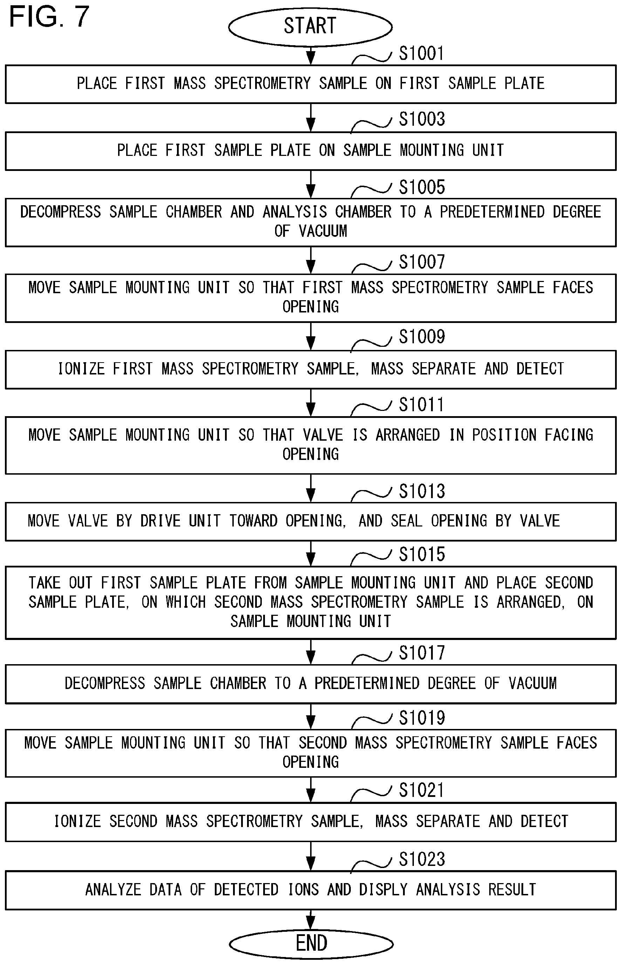

FIG. 7 is a flow chart showing a flow of the analytical method according to the present embodiment. The flowchart of FIG. 7 shows the flow in the case of performing mass spectrometry on each of the two sample plates SP. In the mass spectrometry performed first, a first mass spectrometry sample placed on a first sample plate is analyzed, and in the mass spectrometric analysis performed next, a second mass spectrometry sample placed on a second sample plate is analyzed.

It is to be noted that, the sample plate SP may be replaced many times.

In step S1001, the first mass spectrometry sample is placed on the first sample plate by a user, a dispenser apparatus (not shown), or the like. Upon ending step S1001, step S1003 starts. In step S1003, the user or the like places the first sample plate on the sample mounting unit 100. Upon ending step S1003, the process proceeds to step S1005.

In step S1005, the decompression unit 30 decompresses the sample chamber 10 and the analysis chamber 20 to a predetermined degree of vacuum. Upon ending step S1005, step S1007 starts. In step S1007, the device control unit 51 moves the sample mounting unit 100 to the measurement position so that the first mass spectrometry sample faces the opening 14. Upon ending step S1007, step S1009 starts.

In step S1009, the device control unit 51 causes the irradiation optical system 9 to irradiate the laser light, the first mass spectrometry sample to be ionized, and mass separation and detection to be performed. Upon ending step S1009, step S1011 starts. In step 1011, the device control unit 51 moves the sample mounting unit 100 to the non-measurement position so that the valve 200 is arranged at the first position P1 facing the opening 14. Upon ending step S1011, step S1013 starts.

In step S1013, the drive unit 18 moves the valve 200 toward the opening 14, and the valve 200 seals the opening 14. Upon ending step S1013, the process proceeds to step S1015. In step S1015, the sample door 15 is opened, the user or the like takes out the first sample plate from the sample mounting unit 100, and the second sample plate on which the second mass spectrometry sample is arranged is placed on the sample mounting unit 100. At this time, the sample chamber 10 is exposed to the atmospheric pressure, however the decrease in the vacuum degree of the analysis chamber 20 is suppressed. Upon ending step S1015, step S1017 starts.

In step S1017, the sample door 15 is closed and the decompression unit 30 decompresses the sample chamber 10 to a predetermined vacuum degree. Upon ending step S1017, step S1019 starts. In step S1019, the device control unit 51 moves the sample mounting unit 100 so that the second mass spectrometry sample faces the opening 14. Upon ending step S1019, step S1021 starts.

In step S1021, the device control unit 51 causes the irradiation optical system 9 to irradiate the laser light, the second mass spectrometry sample to be ionized, and mass separation and detection to be performed. Upon ending step S1021, step S1023 starts. In step S1023, the analysis unit 52 analyzes the data of the ions detected by the detection unit 25 in step S1009 and/or S1021, and the display unit 44 displays the analysis result. Upon ending step S1023, the process ends.

According to the above mentioned embodiment, the following advantageous effects can be obtained.
(1) The vacuum device according to the present embodiment, comprises: the sample chamber 10, the analysis chamber 20 connected with the sample chamber 10 via the opening 14; and the decompression unit 30 that decompress the sample chamber 10 and the analysis chamber 20, wherein the sample chamber 10 includes: the valve 200 that is movable between the first position P1 facing the opening 14 and the second position P2 not facing the opening 14; and the drive unit 18 that is fixed to the sample chamber 10 and moves the valve 200 in the first position P1 toward the opening 14 to control opening and closing of the opening 14. Thereby, since a distance by which the valve 200 facing the opening 14 moves for sealing the opening 14 can be shortened, the actuator or the like in the drive unit 18 can be made small and a compact vacuum device 1000 can be realized.
(2) In the vacuum device according to the present embodiment, the sample chamber 10 includes therein the sample mounting unit 100 on which a sample S is mounted. Thereby, the pressure of the sample chamber 10 that accommodates the sample S and the pressure of the analysis chamber 20 can be independently controlled.
(3) In the vacuum device according to the present embodiment, the sample mounting unit 100 and the valve 200 are integrally movable. Thereby, it is not necessary to separately perform at least part of the operation for taking out the sample plate SP and the operation for sealing the opening 14, and the operation can be speeded up and/or simplified.
(4) In the vacuum device according to the present embodiment, a user can replace a sample arranged on the sample mounting unit 100 when the valve 200 is in the first position P1, that is, the sample mounting unit 100 is at the non-measurement position. Thereby, the movement of the sample mounting unit 100 for taking out the sample plate SP and the movement of the valve 200 for sealing the opening 200 can be performed at one time, and the operation can be speeded up and/or simplified.
(5) The vacuum device according to the present embodiment further comprises the fixing portion that prevents the valve 200 from moving from the first position P1 to the second position P2 when the valve 200 has closed the opening 14. Thereby, it is possible to prevent instruments in the analysis chamber 20 from being damaged by an unintentional pressure increase caused due to that the valve 200 coming off the opening 14.
(6) In the vacuum device according to the present embodiment, the fixing portion is the valve side engaging portion 202 and the drive unit side engaging portion 180 where the valve 200 and the drive unit 18 are engaged with each other, and the engagement prevents the valve 200 from moving from the first position P1 to the second position P2. Thereby, the valve 200 can be fixed by using the mechanism in which the drive unit 18 moves the valve 200 without newly providing a movable mechanism for fixing.
(7) The vacuum device according to the present embodiment, comprises: the sample chamber 10, the analysis chamber 20 connected with the sample chamber 10 via the opening 14; and the decompression unit 30 that decompress the sample chamber 10 and the analysis chamber 20, wherein the sample chamber 10 includes: the sample mounting unit 100 on which the sample S is placed; and the valve 200 that is integrally movable with the sample mounting unit 100 between the first position P1 facing the opening 14 and the second position P2 not facing the opening 14. Thereby, the vacuum device 1000 can be configured compactly, it is not necessary to separately perform at least part of the operation for taking out the sample plate SP and the operation for sealing the opening 14, and the operation can be speeded up and/or simplified.
(8) The analytical device according to the present embodiment includes the above vacuum device 1000. Thereby, the compact analytical device 1 can be realized.
(9) In the analytical device according to the present embodiment, the analysis chamber 20 includes therein the mass separation unit 24 that performs mass separation of ions emitted from the sample chamber 10. Thereby, the compact mass spectrometer can be realized.

The following variations are also within the scope of the present invention, and can be combined with the above-described embodiment. In the following variations, the parts having the same structure and function as those of the above-described embodiment are referred to by the same reference signs, and the description thereof will be appropriately omitted.

### Variation 1

In the above-described embodiment, the example in which the following vacuum device 1000 has been applied to the analytical device 1 was shown. Namely, in the vacuum device 1000, the valve 200, which is movable in the direction intersecting the central axis Ax of the opening 14, is moved by the drive of the drive unit 18 fixed to the sample chamber 10 to seal the opening 14. Such a vacuum device 1000 can be applied to any vacuum device that includes a plurality of vacuum chambers connected by an opening and that includes a valve that seals the opening inside the vacuum chamber.

### Variation 2

In the above-described embodiment, the case where ionization is performed by MALDI has been described as an example. However, in the case that the analytical device 1 includes a mass spectrometer, ionization of the sample S can be suitably performed using the vacuum device 1000 according to the present embodiment also through a laser desorption ionization method other than MALDI.

### Variation 3

In the above-described embodiment, the valve side engaging portion 202 of the valve 200 and the drive unit side engaging portion 180 of the drive unit 18 are engaged with each other to fix the valve 200 so as not to move in the direction perpendicular to the central axis Ax of the opening 14. However, the valve 200 may be fixed so as not to move in the direction perpendicular to the central axis Ax of the opening 14 by a fixture installed on the vacuum partition of the sample chamber 10 such as the side wall 11a, the bottom portion 11b, and the partition plate 12.

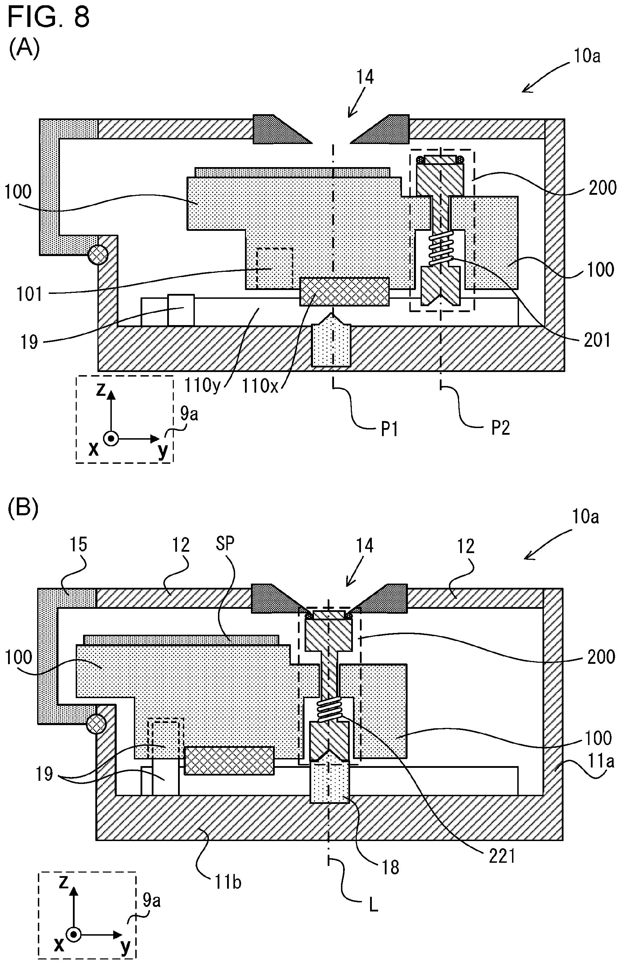

FIG. 8(A) is a sectional view schematically showing a cross section of a sample chamber 10a according to the present variation. The sample chamber 10a includes a fixture 19 installed on the bottom portion 11b. The fixture 19 is configured to be movable in Z-axis direction by an actuator (not shown) arranged on the bottom portion 11b. The actuator that moves the fixture 19 is realized by using, for example, a link mechanism or a cam mechanism. In FIG. 8(A), the fixture 19 is arranged at a position that does not interfere with the movement of the sample mounting unit 100 along the X-direction guide rail 110x and the Y-direction guide rail 110y. The sample mounting unit 100 has a recess 101 formed at the surface facing the bottom portion 11b.

FIG. 8(B) is a sectional view showing a cross section of the sample chamber 10a when the sample mounting unit 100 is fixed by the fixture 19. The device control unit 51 moves the fixture 19 by an actuator (not shown) for moving the fixture 19 to fit the fixture 19 into the recess in the sample mounting unit 100.

It is to be noted that, the method of fixing the valve 200 or the sample mounting unit 100 by the fixture is not particularly limited, and various locking mechanisms can be used.

In the vacuum device of the present variation, the fixing portion that fixes the valve 200 so as not to move in the direction perpendicular to the central axis Ax of the opening 14 is the fixture that is installed on the vacuum partition of the sample chamber 10a to fix the sample mounting unit 100 or the valve 200. Thereby, the valve 200 can be fixed more reliably.

### Second Embodiment

An analytical device 1a according to the second embodiment has substantially the same configuration as the analytical device 1 including the vacuum device 1000 according to the first embodiment. However, it differs from the first embodiment in that the sample mounting unit 100 and the drive unit move integrally. The same parts as those of the first embodiment are referred to by the same signs as those of the first embodiment, and the description thereof will be omitted depending on the case.

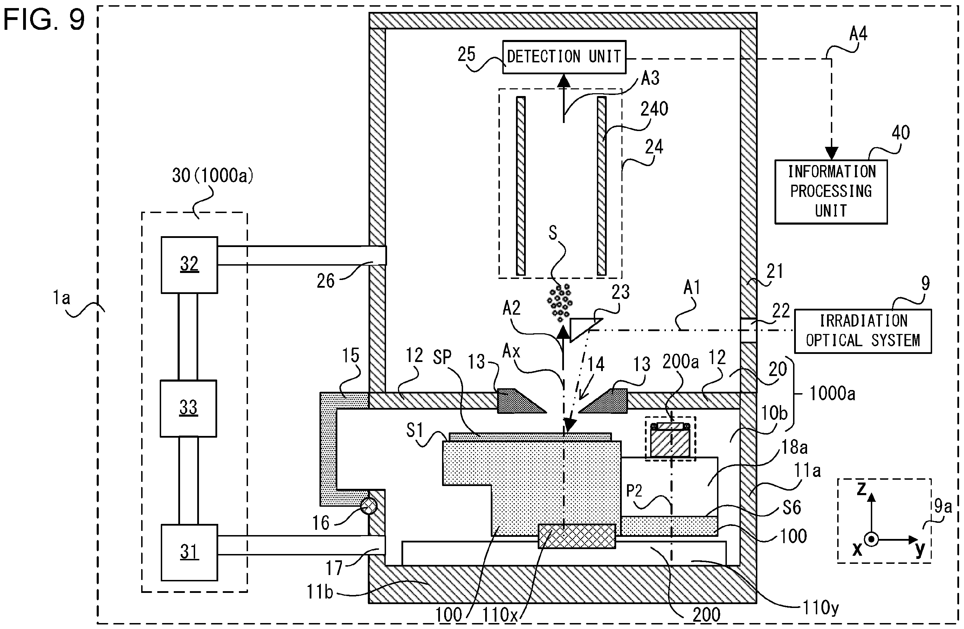

FIG. 9 is a conceptual diagram showing a configuration of the analytical device 1a according to the present embodiment. The analytical device 1a includes the irradiation optical system 9, a vacuum device 1000a, and the information processing unit 40. The vacuum device 1000a includes a sample chamber 10b, the analysis chamber 20, and the decompression unit 30. The sample chamber 10b includes a drive unit 18a installed on a drive unit installation surface S6 of the sample mounting unit 100, and a valve 200a that moves toward the opening 14 by the drive of the drive unit 18a. The valve 200a includes a spring 201a for adjusting the force when sealing the opening 14, and an O-ring R is installed at the end on the side facing the opening 14.

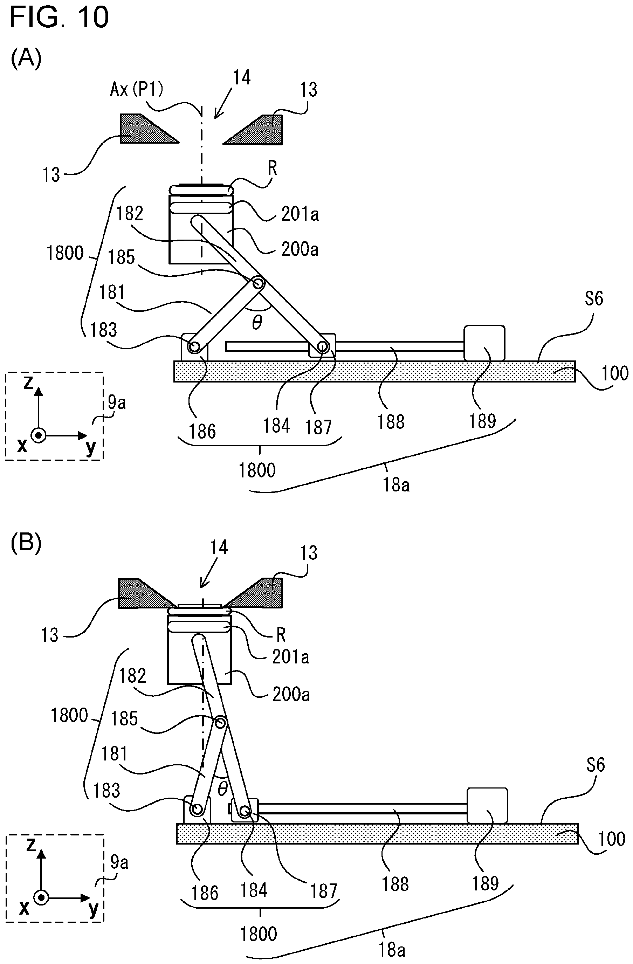

FIG. 10(A) is a conceptual diagram illustrating sealing of the opening 14 in the second embodiment. The drive unit 18a includes a Scott Russell linkage mechanism 1800, a ball screw 188, and a motor 189. The Scott-Russell linkage mechanism 1800 includes a short arm 181, a long arm 182, a fixed shaft 183, a movable shaft 184, a connecting shaft 185, a fixed shaft support member 186, and a ball nut 187. In FIG. 10(A) and FIG. 10(B), the valve 200a is located at the first position P1 (the position overlapping with the central axis Ax of the opening 14) for replacing the sample plate SP. It is to be noted that, in FIG. 10(A) and FIG. 10(B), of the vacuum partition wall between the sample chamber 10 and the analysis chamber 20, only the extraction electrode 13 is shown and the partition plate is omitted.

One end of the short arm 181 is supported rotatably with the X axis as the rotation axis by the fixed shaft support member 186 fixed to the drive unit installation surface S6 of the sample mounting unit 100 via the fixed shaft 183. The other end of the short arm 181 is supported rotatably with the X axis as the rotation axis by the long arm 182 via the connecting shaft 185.

With respect to the long arm 182, one end is rotatably connected to the valve 200a, and the other end is rotatably connected to the ball nut 187 via the movable shaft 184 with the X axis as the rotation axis. The long arm 182 is approximately twice as long as the short arm 181, and the short arm 181 is connected to the long arm 182 at a position where the longitudinal width of the long arm 182 is divided into two.

The ball nut 187 is configured to be movable in the Y-axis direction by rotation of the ball screw 188, which is driven by the motor 189, about a long axis thereof extending in the Y-axis direction as a rotation axis.

FIG. 10(B) is a diagram schematically showing the drive unit 18 when the opening 14 is sealed by the valve 200a. As the ball nut 187 moves from the state shown in FIG. 10(A) toward the fixed shaft support member 186 along the Y-axis direction, the angle θ formed by the long arm 181 and the short arm 182 becomes small, and the long arm 182 takes a posture close to more parallel with respect to the central axis Ax of the opening 14. Thereby, the valve 200a and the end of the long arm 182 on the opposite side of the movable shaft 184 move toward the opening 14, and the O-ring R arranged at the end of the valve 200a is pressed against the extraction electrode 13 to seal the opening 14. For releasing the opening 14, the motor 189 is rotated so that the ball nut 187 moves in the direction away from the fixed shaft support member 186 along the Y-axis direction.

In the above-described second embodiment, it is configured that the drive unit 18a that moves the valve 200a toward the opening 14 is movable integrally with the sample mounting unit 100 in the direction perpendicular to the central axis Ax of the opening 14. Even in this case, it is possible to realize a sample chamber in which the valve and the sample mounting unit are integrally movable in the direction perpendicular to the central axis Ax of the opening 14.

The vacuum device according to the present embodiment, comprises: the sample chamber 10a, the analysis chamber 20 connected with the sample chamber 10b via the opening 14; and the decompression unit 30 that decompress the sample chamber 10b and the analysis chamber 20, wherein the sample chamber 10b includes: the sample mounting unit 100 on which the sample S is placed; and the valve 200 that is integrally movable with the sample mounting unit 100 between the first position P1 facing the opening 14 and the second position P2 not facing the opening 14. Thereby, the vacuum device 1000 can be configured compactly, it is not necessary to separately perform at least part of the operation for taking out the sample plate SP and the operation for sealing the opening 14, and the operation can be speeded up and/or simplified.

The present invention is not limited to the contents of the above embodiments. Other aspects that are conceivable within the scope of the technical idea of the present invention are also included within the scope of the present invention.

The disclosure of the following priority application is herein incorporated by reference: Japanese Patent Application No. 2018-070671 filed April 2, 2018

**REFERENCE SIGNS LIST**

| | | | |
|---|---|---|---|
| 1, 1a ... Analytical Device, | 9 ... Irradiation Optical System, | | |
| 10, 10a, 10b ... Sample Chamber, | 13 ... Extraction Electrode, | | |
| 14 ... Opening, | 15 ... Sample Door, | 18, 18a ... Drive Unit, | 19 ... Fixture, |
| 20 ... Analysis Chamber, | 24 ... Mass Separation Unit, | 25 ... Detection Unit, | |
| 30 ... Decompression Unit, | 40 ... Information Processing Unit, | | |
| 50 ... Control Unit, | 51 ... Device Control Unit, | 52 ... Analysis Unit, | |
| 53 ... Display Control Unit, | 100 ... Sample Mounting Unit, | | |
| 110x ... X-direction Guide Rail, | 110y ... Y-direction Guide Rail, | | |
| 180 ... Drive Unit Side Engaging Portion, | 200, 200a ... Valve, | | |
| 201 ... Spring, | 202 ... Valve Side Engaging Portion, | | |
| 1000, 1000a ... Vacuum Device, | 1800 ... Scott-Russell Linkage Mechanism, | | |
| L ... Long Axis of Valve, | P1 ... First Position, | P2 ... Second Position, | |
| R... O-ring, | S ... Sample, | S1 ... Sample Mounting Surface, | |
| S2 ... Valve Supporting Surface, | S3 ... O-ring Contact Surface, | | |
| S4 ... Sample Mounting Unit Contact Surface, | S5 ... Spring Contact Surface, | | |
| S6 ... Drive Unit Installation Surface, | SP ... Sample Plate. | | |

## Claims

1. A vacuum device, comprising:
a first chamber;
a second chamber connected with the first chamber via an opening; and
a decompression unit that decompresses the first chamber and the second chamber, wherein:
the first chamber includes: a valve that is movable between a first position facing the opening and a second position not facing the opening; and a drive unit that is fixed to the first chamber and moves the valve in the first position toward the opening to control opening and closing of the opening.

2. The vacuum device according to claim 1, wherein:
the first chamber includes therein a sample mounting unit at which a sample is mounted.

3. The vacuum device according to claim 2, wherein:
the sample mounting unit and the valve are integrally movable.

4. The vacuum device according to claim 2, wherein:
a sample arranged on the sample mounting unit can be exchanged by a user when the valve is in the first position.

5. The vacuum device according to any one of claims 2 to 4, further comprising:
a fixing portion that prevents the valve from moving from the first position to the second position after the valve closes the opening.

6. The vacuum device according to claim 5, wherein:
the fixing portion is a portion where the valve and the drive unit are engaged with each other, and the engagement prevents the valve from moving from the first position to the second position.

7. The vacuum device according to claim 5, wherein:
the fixing potion is a fixture that is installed at a vacuum partition of the first chamber and fixes the sample mounting unit or the valve.

8. An analytical device, comprising:
the vacuum device according to any one of claims 1 to 4.

9. The analytical device according to claim 8, wherein:
the second chamber includes therein a mass separation unit that performs mass separation of ions emitted from the first chamber.
